**Europäisches Patentamt**

**European Patent Office**

**Office européen des brevets**

(19)

(11) Veröffentlichungsnummer: **0 017 043**
**A1**

(12) # EUROPÄISCHE PATENTANMELDUNG

(21) Anmeldenummer: **80101294.9**

(22) Anmeldetag: **13.03.80**

(51) Int. Cl.³: **A 01 K 21/00**

(30) Priorität: **16.03.79 DE 2910355**

(43) Veröffentlichungstag der Anmeldung:
**15.10.80 Patentblatt 80/21**

(84) Benannte Vertragsstaaten:
**AT BE CH FR GB IT NL**

(71) Anmelder: **Berger, Heinrich**
**Irscherhof**
**D-5520 Bitburg(DE)**

(72) Erfinder: **Berger, Heinrich**
**Irscherhof**
**D-5520 Bitburg(DE)**

(74) Vertreter: **Schönherr, Wolfgang et al,**
**Hawstrasse 28**
**D-5500 Trier(DE)**

(54) **Hilfsgerät beim Decken eines Mutterschweines.**

(57) Zur Erleichterung des Deckaktes bei Schweinen, insbesondere wenn Eber und Sau unterschiedlich groß sind, ist als Hilfsgerät ein weicher, elastischer Führungstrichter vorgesehen, der mit einem Anlagewulst (E) ausgestattet ist, einen Handgriff (A) hat und einen exzentrisch angeordneten Trichterausgang (B) aufweist.

Um den Führungstrichter auswechseln zu können, ist der Handgriff an einem Ring (D) angeordnet, der den Führungstrichter hält.

EP 0 017 043 A1

./...

Fig. 3

- 1 -

Hilfsgerät beim Decken eines Mutterschweines

Die Erfindung betrifft ein Hilfsgerät zum Erleichtern des
Deckaktes bei Schweinen, insbesondere bei Größenunterschieden zwischen den beteiligten Tieren.

Ein solches Hilfsgerät ist aus der DE-PS 162 453 bekannt.
Es besteht aus einem Deckständer, durch den die Größenunterschiede auszugleichen sind. Hierbei wird das Mutterschwein
in einen Käfig eingesperrt, der jedoch das Aufspringen des
Ebers noch ermöglicht. Ist nun der Eber kleiner als das
Mutterschwein, dann wird die Standfläche des Ebers gegenüber
der Standfläche des Mutterschweines erhöht. Ist der Eber
größer, dann wird umgekehrt mit den Standflächen verfahren.
Ohne diese Hilfe ist der Eber kaum in der Lage, bei einem
Größenunterschied den Deckakt durchzuführen. Die Benutzung
des Deckständers aber erfordert viel Zeit, da die Sau sich
widersetzt, in den Ständer eingespent zu werden. Ferner ist
die Anschaffung eines Deckständers recht teuer.

Der Erfindung liegt die Aufgabe zugrunde, das anfangs beschriebene Gerät so auszubilden, daß es unter Beibehaltung der vorteilhaften Wirkungsweise billig herstellbar und leicht zu
handhaben ist.

Diese Aufgabe wird erfindungsgemäß dadurch gelöst, daß das
Gerät als weicher, elastischer und mit einem Anlagewulst aus-

- 2 -

gestatteter Führungstrichter ausgebildet ist, der mit einem Handgriff versehen ist und einen exzentrisch angeordneten Trichterausgang aufweist. Dabei kann der Handgriff an einem Ring den Führungstrichter haltern, der ein Auswechseln dieses Trichters ermöglicht.

Die mit der Erfindung erzielten Vorteile bestehen insbesondere darin, daß, nachdem der Führungstrichter mit seinem Ausgang in die Scheide der Sau angesetzt wurde, bei einem zu kleinen Eber das Geschlechtsteil, welches beim Aufspringen zu steil nach oben zeigt, an der kurzen oberen Trichterwand nach vorn abgewinkelt und durch den Trichterausgang in die Scheide eingeführt wird. Ist der Eber zu groß, dann sollte der Führungstrichter umgekehrt so angesetzt werden, daß die kurze Trichterwand sich unten befindet. Selbst bei gleichgroßen Schweinepaaren kann erfahrungsgemäß der Deckakt infolge von Unruhe und Lebhaftigkeit nicht immer durchgeführt werden, da das männliche Geschlechtsteil die Scheide oft nicht trifft. Hier hilft die Erfindung ebenfalls.

Ein Ausführungsbeispiel der Erfindung ist in der Zeichnung dargestellt und wird im folgenden näher beschrieben. Es zeigen:

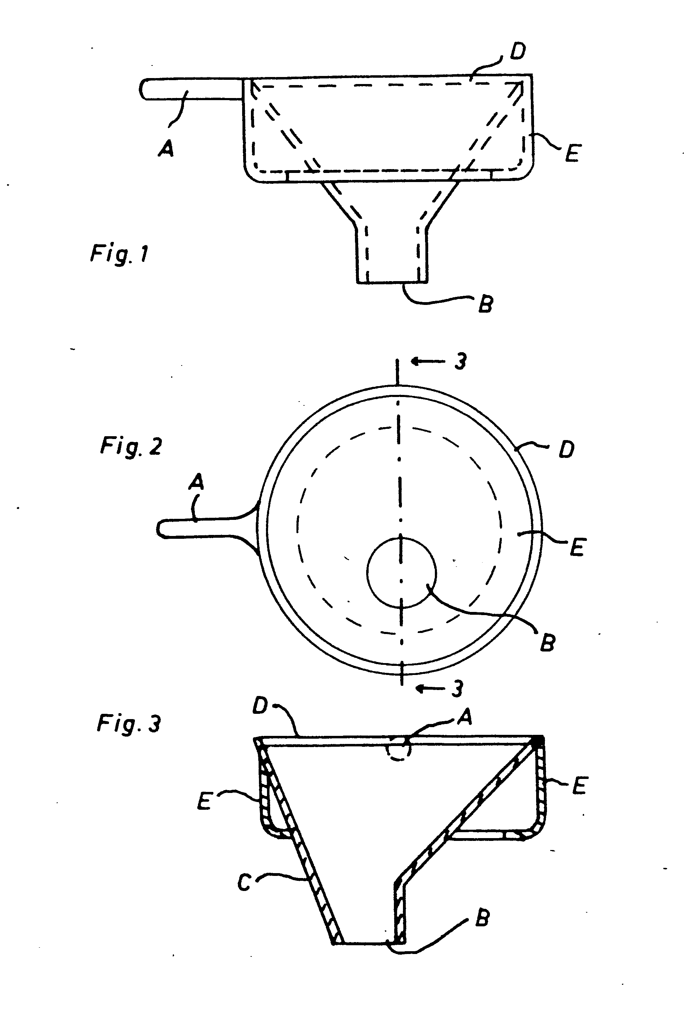

Fig. 1 eine Seitenansicht des Hilfsgerätes,

Fig. 2 eine Draufsicht,

Fig.3 einen Schnitt nach 3-3 der Fig. 2.

Mit dem Haltegriff A wird der Führungstrichter so angesetzt, daß der Ausgang B in die Scheide des Muttertieres einsitzt, und der Anlagewulst E anliegt. Ist der Eber kleiner als das Mutterschwein, dann sollte die kurze Trichterwand C sich oben befinden. Ist der Eber größer, dann sollte die kurze Trichterwand C sich unten befinden. Der Führungstrichter kann als ein einziges Formstück hergestellt werden. Zweckmäßigerweise kann am Haltegriff A ein Ring D angeordnet sein, der das Wechseln des Führungstrichters gewährleistet.

- 4 -

Patentansprüche

1. Hilfsgerät zur Erleichterung des Deckaktes bei Schweinen, insbesondere bei Größenunterschieden zwischen den beteiligten Tieren, dadurch gekennzeichnet, daß das Gerät als weicher, elastischer und mit einem Anlagewulst (E) ausgestatteter Führungstrichter ausgebildet ist, der mit einem Handgriff (A) versehen ist und einen exzentrisch angeordneten Trichterausgang (B) aufweist.

2. Hilfsgerät nach Anspruch 1, dadurch gekennzeichnet, daß der Handgriff (A) an einem Ring (D) den Führungstrichter haltert.

1/1

Fig. 1

Fig. 2

Fig. 3

0017043

**Europäisches Patentamt**

**EUROPÄISCHER RECHERCHENBERICHT**

Nummer der Anmeldung

EP 80 10 1294.9

## EINSCHLÄGIGE DOKUMENTE

KLASSIFIKATION DER ANMELDUNG (Int.Cl.)

| Kategorie | Kennzeichnung des Dokuments mit Angabe, soweit erforderlich, der maßgeblichen Teile | betrifft Anspruch |
|---|---|---|
| A | DE - C - 134 857 (F. HÜTTENRAUCH) <br> * ganzes Dokument * <br> -- | |
| D,A | DE - C - 162 453 (E. KÜHN) <br> * ganzes Dokument * <br> ---- | |

A 01 K 21/00

RECHERCHIERTE SACHGEBIETE (Int. Cl.)

A 01 K 21/00

A 01 K 29/00

A 61 D 7/02

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie. Übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 24-06-1980 | SCHOFER |

EPA form 1503.1 06.78